Europäisches Patentamt

(19) European Patent Office (11) Publication number: **0 295 753**
**B1**
Office européen des brevets

(12) **EUROPEAN PATENT SPECIFICATION**

(45) Date of publication of the patent specification: (51) Int. Cl.⁵: **A01G 17/08, B65D 63/10**
**19.09.90**

(21) Application number: **88201231.3**

(22) Date of filing: **16.06.88**

(54) **Binding strip consisting of elastic, deformable material.**

(30) Priority: **19.06.87 NL 8701436**

(43) Date of publication of application:
**21.12.88 Bulletin 88/51**

(45) Publication of the grant of the patent:
**19.09.90 Bulletin 90/38**

(84) Designated Contracting States:
**AT BE CH DE ES FR GB GR IT LI LU NL SE**

(56) References cited:
**BE-A- 621 307**
**FR-A- 1 075 876**
**GB-A- 1 133 159**
**GB-A- 1 333 578**
**GB-A- 2 103 277**
**US-A- 3 875 620**
**US-A- 4 477 950**

(73) Proprietor: **Schutte, Paulus, Raktweg 6, NL-5406 TV Uden(NL)**

(72) Inventor: **Schutte, Paulus, Raktweg 6, NL-5406 TV Uden(NL)**

(74) Representative: **Noz, Franciscus Xaverius, Ir. et al, Algemeen Octrooibureau P.O. Box 645, NL-5600 AP Eindhoven(NL)**

ACTORUM AG

## Description

The invention relates to a set of binding strips consisting of an elastic, deformable material, a strip being provided with at least two corresponding slotted openings and a number of corresponding projections located spaced from each other in the longitudinal direction of the strip and extending transversely to the longitudinal direction of the strip, on both edges of the strip all this such that when a part of the strip comprising projections is twisted over an anlge of ± 90° relatively to a part of the strip having a slotted opening, at least said part of the strip having projections can be moved through said slotted opening and will have projections co-operating with the boundary wall of said slotted opening when afterwards the strip is twisted back again into its original shape.

Such a binding strip is known from the DE-A 753 420. In this known binding strip the one strip half is provided with a number of slotted openings, whilst the other strip half has the projections.

It is true that it is possible to produce greater length of strip material made up of said known binding strips and, when being used, cut off a unit to be used as a fastening strip, but said cutting off cannot be done at random thereby, as the correct location of the slots and the projections described must always be maintained for each binding strip in order to make effective fastening possible.

In order to obviate this drawback the NL-A 120 277 discloses an embodiment whereby the slotted openings are provided regularly spaced from each other along the entire length of the strip and are bounded by parts forming projections. A disadvantage of this construction is that a comparatively great deal of material is lost in production, whilst the distance between the successive effective projections for fixing the strip is comparatively large.

The purpose of the invention is to obtain a binding strip of the above kind, with which the disadvantages of the known binding strips can be met.

In particular the aim is to obtain a binding strip suitable for tying up refuse bags, which strip is completely made of plastic material. A disadvantage of the binding strips used for this purpose so far is that they contain steel wire. When such binding strips are used it is namely necessary to remove the binding strips when a parcel of refuse bags is rejected, in order to prepare the material of the rejected refuse bags for recycling so as to prevent that the steel wires damage the processing machines.

Removing the binding strips from the packings of the refuse bags is labour intensive, however, and therefore costly, so that there is a large demand for suitable binding strips which are completely made of plastic material.

According to the invention a set of binding strips has now been provided whereby between each pair of successive slotted openings there are provided on both edges of the strip at least one group of projections, such that the mutual distances between said projections in a group of projections and the distance between the part of the strip having a slotted opening and the projections located closest thereto is equal to at least substantially the width of a projection, whilst the distance between the outer projections located closest together of two groups of projections located between two parts of the strip having slotted openings or the distance between the outer projection of one group of projections and the part of the strip having a slotted opening is at least substantially equal to the length of the part of the strip having the slotted opening; the arrangement being such that the projections and the part of the strip having a slotted opening fit between the projections and the part of the strip having a slotted opening of an adjacent binding strip.

When using the construction according to the invention a binding strip may be cut at random from a strip of material comprising a number of binding strips and yet be fixed in an effective manner, whereby the distance between at least a number of the successive projections can be kept comparatively small.

As further the binding strips have been designed in such a way that the projections and the parts having the slotted holes of binding strip fit between the corresponding parts of a similar binding strips said binding strips can be formed in sheet like material with a minimum of lost material; in fact only the material coming out of th slotted openings will be lost.

It is noted, that from BE-A 621 307 there is known a binding strip having projections between its ends, at one end a short slotted hole and a round hole and at the other end a relatively long slotted hole.

US-A 4 477 950 discloses a binding strip having projections, at one end a slotted hole and the other end a tapered extension.

The invention will be further explained hereinafter with reference to a few possible embodiments of the construction according to the invention illustrated in the accompanying figures.

Fig. 1 is an embodiment of a binding strip according to the invention.

Fig. 2 illustrates a combination of a pair of binding strips as they may be cut possibly together with several binding strips, from a film of material.

Figs. 3–6 are further possible embodiments of binding strips according to the invention.

Figs. 7–10 are further possible embodiments of slotted openings provided in the connecting pieces of the binding strips.

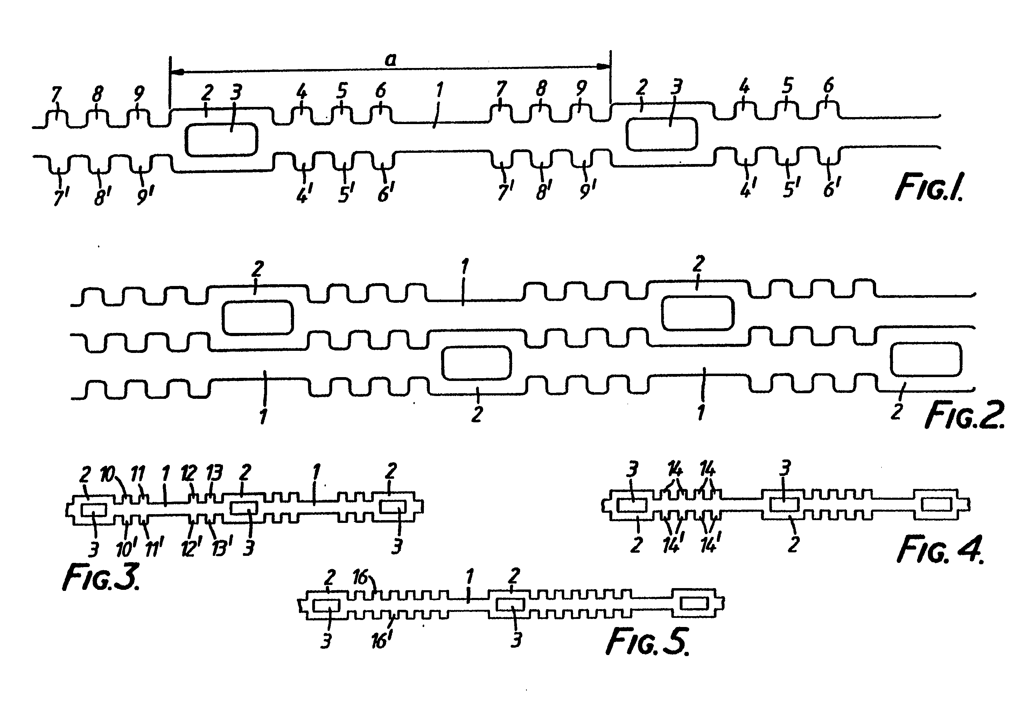

The binding strip illustrated in fig 1, preferably made of plastic material, comprises elongated connecting parts 1 which form a unit with rectangular connecting pieces 2 connected together by said connecting parts 1, in which connecting pieces 2 there are formed elongated slotted openings 3. Each connecting part 1 is furthermore provided with six projections 4 - 9 on one side, and with six projections 4' - 9' located diametrically opposite the projections 4 - 9 on the other side. The distance between each set of three projections located most closely near a connecting piece and the distance between a connecting piece and the nearest projection 4 or 9 is equal to the width of a projection, as will be apparent from fig 1, whilst the distance between two groups of three equally spaced projections 4 - 6 and 7 - 9 respectively, located on the same side of a connecting part, is equal to the length of a connecting piece 2.

As is illustrated in fig 2 it is possible because of that to cut a number of binding strips located side by side out of a film of material, whereby binding strips located beside one another are staggered relatively to each other over a distance equal to half the centre distance between two slotted opening 3. Because of that it will be possible, as appears from fig 2, that projections from one binding strip engage in the recesses of an adjacent binding strip, whilst one connecting piece engages in the larger interspace between the outermost projections of two groups of three projections. Consequently, when a number of binding strips is cutted out of a filmy material the only refuse which is produced will be the material which is cut out of the film in order to form the slotted openings 3.

When a binding strip is to be used it may be cut off to a length equal to the distance a between the two left-hand ends, seen in fig 1, of successive connecting pieces 2 or a multiple of said distance.

In one embodiment specially intended for tying up plastic refuse bags the above-mentioned distance a is e.g. 44 mm and usually a strip having a length equal to 2a will be used. The length of a connecting piece thereby measures 10 mm, whilst the width of a projection 4 - 9 is 2 mm. The largest width of the strip is 6.4 mm. The thickness of the binding strip is 0.6 mm. When such a binding strip is to be used it can e.g. be wound around the folded upper end of the bag, and one end of the binding strip can thereby be twisted 90° relatively to the position illustrated in the figure in order to be inserted through the slotted opening 3 located near the other end. After the binding strip has been drawn tight the binding strip can be twisted back to its original position again, whereby one boundary edge of one of the projections or of a connecting piece will bear against the boundary of the slotted opening 3 through which the end of the strip was first inserted.

When the binding strips are used as refuse bag fasteners a number of binding strips, located side by side and forming one connected mat, can easily be packed together with a package of refuse bags, using the same equipment.

The binding strips connected together in a mat will already be cut loose from each other for the greater part thereby, and only be connected by a few easily disconnected bridges, e.g. along the longitudinal edges of the connecting pieces.

A further advantage of the binding strip according to the invention is that it can be made without acute angles, which may injure the user.

In connection with this reference can be made to the accompanying examples of embodiments illustrated in the figs 3 - 7. In these figures those parts which correspond with parts discussed with reference to the preceding figures and illustrated in said figures are provided with the same reference numbers as in fig 1.

It is noted that in the figures 3 - 5 the binding strips are illustrated at substantially their actual size, as intended for use with refuse bags.

As is illustrated in fig 3 groups of two projections 10 and 11, 12 and 13 respectively and opposed groups of projections 10', 11' and 12', 13' respectively are provided, instead of groups of three projections, such as the projections 4 - 6 or 7 - 9.

In the embodiment according to fig 4 each time a group of four projections 14 and a group of four projections 14' located opposite said group joins a connecting piece 2, whilst the interspace between the projections located furthest from said connecting piece 2 and a further connecting piece is about equal to the length of such a connecting piece.

The embodiment illustrated in fig 5 at least essentially corresponds with the embodiment according to fig 4 whereby, however, groups of six projections 16 and 16' are provided instead of groups of four projections.

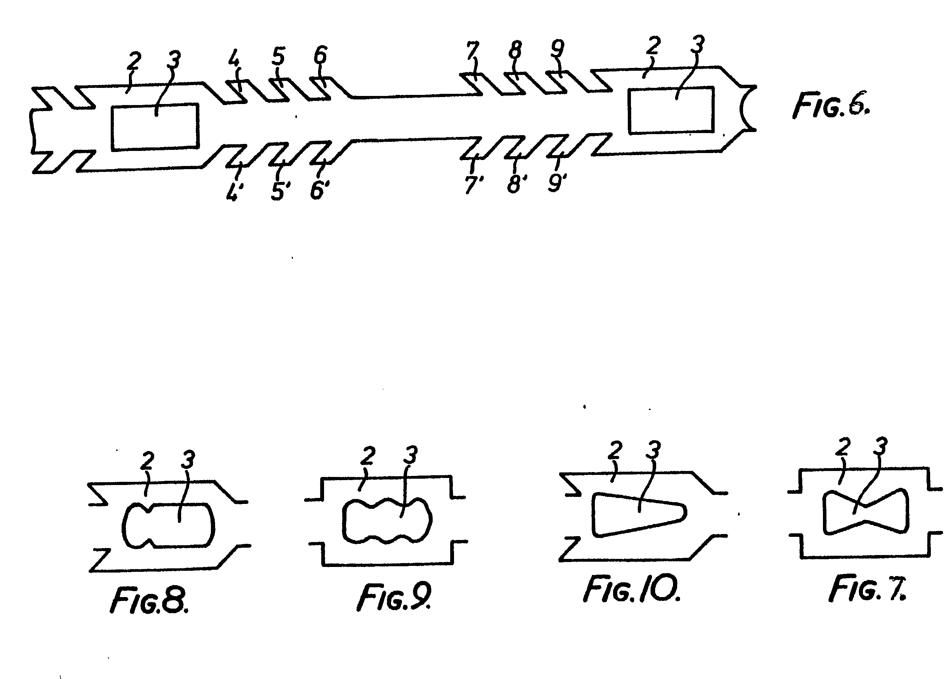

In the embodiment according to fig 6 the projections do no extend rectangularly to the longitudinal direction of the binding strip, as in the preceding embodiments, but at an acute angle thereto.

Furthermore it is possible that the width of a projection is different from the width of a recess located between two projections.

Figs 7-10 illustrate various other possible embodiments of the slotted openings provided in the connecting pieces 2.

Fig 8 illustrates an embodiment whereby near one end there is provided a constriction in the opening 3.

Fig 9 illustrates an embodiment having several regularly spaced constrictions in the opening 3.

The opening 3 according to fig 10 is more or less triangular, whilst the opening according to fig 7 is more or less hourglass-shaped.

## Claims

1. A set of binding strips consisting of an elastic, deformable material, a strip being provided with at least two corresponding slotted openings (3) and a number of corresponding projections (4–9, 4'–9'; 10–13, 10'–13'; 14, 14'; 16, 16') located spaced from each other in the longitudinal direction of the strip and extending transversely to the longitudinal direction of the strip, on both edges of the strip all this such that when a part of the strip comprising projections (4–9, 4'–9'; 10–13, 10'–13'; 14, 14'; 16, 16') is twisted over an angle of ± 90° relatively to a part (2) of the strip having a slotted opening (3), at least said part of the strip having projections (4–9), 4'–9'; 10–13, 10'–13'; 14, 14'; 16, 16') can be moved through said slotted opening (3) and will have projections co-operating with the boundary wall of said slotted opening (3) when afterwards the strip is twisted back again into its original shape, characterized in that between each pair of successive slotted openigns there are provided on both edges of the strip at least one group of projections (4–6, 4'–6'; 7–9, 7'–9'; 10, 10'; 11, 11'; 12, 12'; 13, 13'; 14, 14'; 16, 16'), such that the mutual distances between said projections in a group of projections and the distance between the part (2) of the strip having a slotted opening (3) and the projections (4, 9, 4′, 9′; 10, 13, 10′, 13′; 14, 14′; 16, 16′) located closest thereto is equal to at least substantially the width of a projection, whilst the distance between the outer projections (6, 7, 6′, 7′; 11, 12, 11′, 12′) located closest together of two groups of projections located between two parts of the strip having slotted openings or the distance between the outer projection (14, 14′; 16, 16′) of one group of projections and the part (2) of the strip having a slotted opening (3) is at least substantially equal to the length of the part of the strip having the slotted opening, the arrangement being such that projections and the part of the strip having a slotted opening fit between the projections and the part of the strip having a slotted opening of an adjacent binding strip.

2. A set according to claim 1, characterized in that the projections (4–9) extend perpendicularly to the longitudinal axis of the strip.

3. A set according to claim 1, characterized in that the projections (4–9) extend at an acute angle relatively to the longitudinal axis of the strip.

4. A set according to any of the preceding claims, characterized in that a slotted opening (3) has at least one constriction.

## Patentansprüche

1. Satz von Bindestreifen, die aus einem elastischen, verformbaren Material bestehen, wobei ein Streifen mit mindestens zwei entsprechenden geschlitzten Öffnungen (3) und einer Reihe von entsprechenden Vorsprüngen (4–9, 4′–9′; 10–13; 10′–13′; 14, 14′; 16, 16′) versehen ist, die im Abstand voneinander in Längsrichtung des Streifens angeordnet sind und sich quer zur Längsrichtung des Streifens auf beiden Rändern des Streifens derart erstrecken, daß dann, wenn ein Teil des Streifens, der Vorsprünge (4–9, 4′–9′; 10–13, 10′–13′, 14, 14′; 16, 16′) aufweist, über einen Winkel von ± 90° relativ zu einem Teil (2) des Streifens, der eine geschlitzte Öffnung (3) aufweist, verdreht wird, mindestens der Teil des Streifens, der die Vorsprünge (4–9, 4′–9′; 10–13; 10′–13′; 14, 14′; 16, 16′) aufweist, durch die geschlitzte Öffnung (3) bewegt werden kann und Vorsprünge aufweist, die mit der Grenzwand der geschlitzten Öffnung (3) zusammenwirken, wenn danach der Streifen in seine Ursprungsform wieder zurückgedreht wird, dadurch gekennzeichnet, daß zwischen jedem Paar von aufeinanderfolgenden geschlitzten Öffnungen an beiden Rändern des Streifens mindestens eine Gruppe von Vorsprügen (4–6, 4′–6′; 7–9, 7′–9′; 10, 10′, 11, 11′, 12, 12′; 13, 13′; 14, 14′; 16, 16′) derart vorgesehen ist, daß der gegenseitige Abstand zwischen den Vorsprüngen in der Gruppe von Vorsprüngen und der Abstand zwischen dem Teil (2) des Streifens, der eine geschlitzte Öffnung (3) aufweist, und den Vorsprüngen (4, 9, 4′, 9′; 10, 13, 10′, 13′; 14, 14′; 16, 16′), die am nächsten hierzu angeordnet sind, mindestens im wesentlichen der Breite eines Vorsprunges entspricht, während der Abstand zwischen den äußeren Vorsprüngen (6, 7, 6′, 7′; 11, 12, 11′, 12′), die am nächsten zueinander angeordnet sind, von zwei Gruppen von Vorsprüngen, welche sich zwischen zwei Teilen des Streifens, die geschlitzte Öffnungen aufweisen, befinden, oder der Abstand zwischen dem äußeren Vorsprung (14, 14′; 16, 16′) einer Gruppe von Vorsprüngen und dem Teil (2) des Streifens, der eine geschlitzte Öffnung (3) aufweist, mindestens im wesentlichen der Länge des Teiles des Streifens, der die geschlitzte Öffnung aufweist, entspricht, wobei die Anordnung derart ist, daß die Vorsprünge und der Teil des Streifens, der eine geschlitzte Öffnung aufweist, zwischen die Vorsprünge und den Teil des Streifens, der eine geschlitzte Öffnung aufweist, eines benachbarten Bindestreifens passen.

2. Satz nach Anspruch 1, dadurch gekennzeichnet, daß sich die Vorsprünge (4–9) senkrecht zur Längsachse des Streifens erstrecken.

3. Satz nach Anspruch 1, dadurch gekennzeichnet, daß sich die Vorsprünge (4–9) spitzwinklig zur Längsachse des Streifens erstrecken.

4. Satz nach einem der vorangehenden Ansprüche, dadurch gekennzeichnet, daß eine geschlitzte Öffnung (3) mindestens eine Einschnürung aufweist.

## Revendications

1. Un ensemble de liens ou bandes de serrage constitué par un matériau élastique déformable, une bande étant munie d'au moins deux ouvertures fendues correspondantes (3) et d'un nombre de saillies correspondantes (4–9, 4′–9′; 10–13, 10′–13′; 14, 14′; 16, 16′) situées de façon espacée entre elles dans la direction longitudinale de la bande et s'étendant transversalement à la direction longitudinale de la bande, sur les deux bords de la bande tout ceci de telle manière que lorsqu'une partie de la bande comprenant les saillies (4–9, 4′–9′; 10–13, 10′–13′; 14, 14′; 16, 16′) subit une torsion sur un angle de ± 90° par rapport à une partie (2) de la bande ayant une ouverture fendue (3), au moins la partie de la bande présentant les saillies (4–9, 4′–9′, 10–13, 10′–13′; 14, 14′; 16, 16′) peut être déplacée à travers l'ouverture fendue (3) et aura des saillies coopérant avec la paroi limite de l'ouverture fendue (3) après avoir fait de nouveau subir à la bande une torsion pour la remettre dans sa forme d'origine, caractérisé en ce qu'entre chaque paire d'ouvertures fendues successives sont prévues sur les deux bords de la bande au moins un groupe de saillies (4–6, 4′–6′; 7–9, 7′–9′; 10, 10′, 11, 11′, 12, 12′, 13, 13′; 14, 14′, 16, 16′) de telle sorte que les distances réciproques entre les saillies dans un groupe de saillies et la distance entre la partie (2) de la bande ayant une ouverture fendue (3) et les saillies (4–9, 4′–9′; 10, 13, 10′, 13′; 14, 14′; 16, 16′) situées le plus près de celle-ci est égale à au moins sensiblement la largeur d'une saillie, tandis que la distance entre les saillies extérieures (6, 7, 6′, 7′; 11, 12, 11′, 12′) situées ensemble le plus près des deux groupes de saillies où la distance entre la saillie extérieure (14, 14′; 16, 16′) d'un groupe de saillies et la partie (2) de la bande ayant une ouverture fendue (3) est au moins sensiblement égale à la longueur de la partie de la bande ayant l'ouverture fendue, l'agencement étant tel que les saillies et la partie de la bande ayant une ouverture fendue s'adaptent entre les saillies et la partie de la bande ayant une ouverture fendue d'une bande ou lien de serrage avoisinant.

2. Un ensemble selon la revendication 1, caractérisé en ce que les saillies (4–9) s'étendent perpendiculairement à l'axe longitudinal de la bande.

3. Ensemble selon la revendication 1, caractérisé en ce que les saillies (4–9) s'étendent selon un angle aigu par rapport à l'axe longitudinal de la bande.

4. Ensemble selon l'une quelconque des revendications précédentes caractérisé en ce qu'une ouverture fendue (3) comporte au moins un rétrécissement.

a

7  8  9  2  3  4  5  6  1  7  8  9  2  3  4  5  6

7'  8'  9'  4'  5'  6'  7'  8'  9'  4'  5'  6'  **FIG.I.**

2  1  2

1  2  1  2  **FIG.2.**

2 10 11 1 12 13 2  1  2

3 10' 11' 12' 13' 3  3

**FIG.3.**

3 14 14 3

2 14' 14' 2  **FIG.4.**

2 16  1 2

3 16' 3  **FIG.5.**

EP 0 295 753 B1

Fig. 6.

Fig. 7.

Fig. 8.

Fig. 9.

Fig. 10.